# EUROPEAN PATENT SPECIFICATION

(11) **EP 1 343 384 B1**
(45) Date of publication and mention of the grant of the patent: **21.02.2007**
(21) Application number: 01984770.6
(22) Date of filing: 26.11.2001
(51) Int. Cl.: A23D 7/00, A23D 7/02

(54) **FAT CONTINUOUS FOOD PRODUCT**
NAHRUNGSMITTEL MIT KONTINUIERLICHER FETTPHASE
PRODUIT ALIMENTAIRE GRAS A PHASE CONTINUE

(30) Priority: 20.12.2000 EP 00204682
(43) Date of publication of application: 17.09.2003
(73) Proprietor: UNILEVER N.V., 3013 AL Rotterdam (NL); UNILEVER PLC, London, Greater London EC4P 4BQ (GB)
(72) Inventor: PELAN, Edward G, Unilever Research Vlaardingen, 3133 AT Vlaardingen (NL); STRUIK, Mathheus, Unilever Research Vlaardingen, 3133 AT Vlaardingen (NL)
(74) Representative: Joppe, Hermina Laura Petronella
(86) International application number: PCT/EP2001/013828
(87) International publication number: WO 2002/049443

(56) References cited:
- EP-A- 0 380 170
- EP-A- 0 584 835
- EP-A- 0 968 655
- WO-A-95/10196
- WO-A-99/34684
- DD-A- 218 832
- GB-A- 1 359 639

## Description

### Field of the invention

The invention relates to a fat continuous, spreadable food product which comprises a dispersed aqueous phase containing starch and which comprises a primary emulsifier polyglycerol polyricinoleate and one or more co-emulsifiers.

### Background to the invention

Fat continuous spreadable food products are used by consumers as an underlayer on bread or toast or for other purposes such as shallow frying of food stuff, baking ingredient, hot toppings.
Examples of such spreadable food products are margarine, butter, low fat spreads.

EP-A-968,655 discloses fat continuous food products which comprise about 60 wt% fat, a powerful emulsifier, polyglycerol polyricinoleate, and a monoglyceride. The fat content of the disclosed products is about 60 wt%. Optionally the products contain a stabiliser such as a thickened polysaccharide or gelatin to prevent water separation upon storage. These products are suitably used for spreading on bread or shallow frying of foodstuff and are reported to break down easily in the mouth whereby taste and flavour components of the aqueous phase are released.
Although these products are reported to de-emulsify rapidly when ingested, it has now been found that the mouth feel still shows disadvantages in that the break up of the emulsion takes a long time due to the presence of the powerful emulsifying properties of polyglycerol polyricinoleate. Furthermore these products show some defects in long term storage at elevated temperatures as they are claimed to de-emulsify at 36°C.

EP-A-157,954 discloses edible water in oil emulsions, which are produced by incorporating as a component of the dispersed phase of the emulsion, hydrated, non-crystalline, intact, undissolved starch granules. The resulting emulsion allegedly easily breaks up in the mouth and shows good microbial stability upon storage. An essential feature of this product is that the starch is partially swollen by the aqueous phase i.e. it is swollen to submaximal degree.
These products were found to show insufficient storage stability and a slow release of taste and flavour components as swollen, non gelatinised starches are not easily and only slowly broken down by amylase. Furthermore the presence of large swollen starch particles can lead to a sandy mouthfeel to the food products.

It is an object of the current invention to provide a food product which is stable under storage at ambient and higher temperatures, spreads easily and shows good organoleptic properties; for example these products do not give a sandy mouth feel.

### Summary of the invention

It has surprisingly been found that a fat continuous product which comprises a gelatinised starch in the dispersed aqueous phase and a fat which has a low solids content at a temperature of 35°C or above, fulfils the objectives as indicated.

Therefore the invention relates to a fat continuous spreadable food product comprising a dispersed aqueous phase, a primary emulsifier polyglycerol polyricinoleate, and one or more co-emulsifiers, wherein the amount of fat is from 25 to 85 wt%, the amount of polyglycerol polyricinoleate is from 0.05 to 5 wt%, the amount of co-emulsifier is up to 0.5 wt% and wherein the dispersed aqueous phase comprises a starch of which at least 50 wt% is fully gelatinised and wherein the solid fat content of the fat is below 6 % at 35°C , or above.

In a further aspect the invention relates to a process for the preparation of these products according to claim 11.

### Detailed description of the invention

The invention relates to spreadable food products. Spreadable is defined as being easily spread with a knife on a substrate such as bread, without tearing the bread at the ambient temperature of the product during spreading.

In the description and claims where weight% is used this is weight% on total product weight unless otherwise is indicated.

The products according to the invention are desirably stable under storage at temperatures at or above ambient temperature. This storage stability is determined by the test described in the examples.
Products according to the invention show a phase separation of less than 5 wt % after storage at 35 °C, preferably 40 °C, for 10 weeks, more preferably 26 weeks.

Products according to the invention comprise polyglycerol polyricinoleate which is commercially available under the name Admul WOL from Quest-International. This ingredient is generally known to be an excellent water in oil emulsifier.

The amount of polyglycerol polyricinoleate in the products of the invention is from 0.05 to 5 wt% on total product weight. Higher amounts lead to products which do not easily de-emulsify in the mouth upon consumption and will hence not show the desired organoleptic properties. Food products comprising polyglycerol polyricinoleate in amounts below 0.05 wt% are not stable under elevated storage temperatures and show phase separation upon storage at 35 °C for several weeks. Preferably the amount of polyglycerol polyricinoleate in food products according to the invention is from 0.2 to 0.4 wt%.

Without wishing to be bound by any theory, applicants believe that the surprisingly good storage stability combined with a good melting behaviour, are due to the presence of the powerful, water-in-oil emulsifier (w/o), polyglycerol polyricinoleate, in combination with a gelatinised molecularly dispersed starch component network in the dispersed aqueous phase. The W/O emulsifier confers physical emulsion stability against elevated temperature, by adsorbing at the water-oil interface, resulting in thermo-stable water droplets, which are also partially structured by the presence of the free amylose and amylopectin, thus it is believed that we have emulsion stability from two different mechanisms.

The aqueous phase comprises a starch of which at least 50 wt% is fully gelatinised. Native, non gelatinised starch, is visible in a product in the form of small individual granules. Starch which is at least partially gelatinised show remains of starch granularity (ghosts) which are easily identified by eye. In fully gelatinised starch no remains of starch granularity (ghosts) can be seen. Thus by using suitable optical microscopy techniques (e.g. depolarised light microscopy, or heated stage microscopy) the presence/absence of starch granules and their location in the water droplet can be seen.

In the products according to the invention, at least 50 wt% of the starch is fully gelatinised. This can be determined by use of light microscopy as indicated above.
Another method to determine whether the starch is gelatinised is by determining a viscosity curve against temperature of a starch in aqueous medium at a concentration of about 2 to 10 wt%. If the starch is still in the native form, initially viscosity will increase with increase in temperature during cooking, and after a maximum viscosity has been reached, corresponding to maximal starch granule swelling, then with prolonged heating and time, viscosity rapidly decreases due to starch granule rupture, which releases the individual amylose and amylopectin molecules into the aqueous phase. When granule break down is complete, the starch is said to be fully gelatinised.
If the starch is fully gelatinised and subjected to an increase in temperature, the viscosity will not rise, unless the amount of gelatinised starch in the aqueous medium is increased. The amount of viscosity increase caused by heating a specific starch in aqueous medium can be compared to the viscosity increase obtained at by heating an aqueous medium comprising a native starch, in the same concentration as the starch of which the gelatinisation degree is unknown.
Of the starches in the product according to the invention preferably at least 70 wt%, more preferred at least 80 wt%, even more preferred at least 90 wt% is fully gelatinised. Even more preferred all starch in the product according to the invention is fully gelatinised starch.

The good melting behaviour and release of flavour and taste components present in the aqueous phase upon consumption of the current food product is believed to be resulting from the enzymatic breakdown of the molecularly available amylose and amylopectin from the starch by salivary amylase present in the saliva, which is assisted by the mastication process.

In preferred food products according to the invention, the aqueous phase comprises a fully gelatinised starch selected from any of the main starch groups: wheat, potato, rice, maize, waxy rice or waxy maize.

Examples of suitable starches include Remyrice^{tm}, Tapioca^{tm}, Purity LFS^{tm}

The amount of starch in the food product according to the invention depends somewhat on the type of chosen starch and is preferably from 0.2 to 5 wt%, more preferred from 0.7 to 3 wt%, most preferred from 1 to 2 wt%. Very high levels of starch were found to lead to a slow perception of flavour and salt release, probably due to too high a droplet viscosity, whereas adding insufficient amounts of starch lead to products which did not exhibit the desired rapid break-up under amylase action.

To ensure homogeneous distribution of the aqueous phase in the continuous fat phase, the droplet size distribution D₃,₃ of the dispersed aqueous phase is preferably less than 20 µm, more preferably from 4 to 10 µm. The method to determine D₃,₃ is illustrated in the examples.

It will be appreciated that the droplet size can be controlled by adjusting the processing conditions in the unit operations:
e.g. higher rotational speed in a scraped surface heat exchanger will produce correspondingly smaller water droplet size distributions.

The food product according to the invention comprises from 20 to 85 wt% of a fat. Preferably the amount of fat is from 30 to 75 wt%, more preferably from 35 to 70 wt%, most preferred from 45 to 65 wt%.

The fat can be a single fat or a combination of fats. The fat or combination of fats is selected such that the solid fat content is below 6 % at 35°C, preferably below 5% at 35°C, more preferred below 4% at 35°C, most preferred from 2 to 4% at 35°C. The method to determine solid fat content is described in the examples.
If products are desired that are storage stable at lower temperatures of storage, which still show good melting properties upon consumption, the solid fat content is preferably below 6% at the desired storage temperature. Therefore in an alternative embodiment, the invention relates to food products wherein the solid fat content of the fat or fat blend is below 6 wt% at a temperature at or above 20 °C, more preferred at or above 25 °C.

The fat or fat blend may comprise vegetable or animal fats which may be hydrogenated, interesterified or fractionated. Suitable animal fats may consist of butterfat tallow or hydrogenated fish oil. Suitable vegetable fats can for example be selected from the group comprising bean oil, sunflower oil, palm kernel oil, coconut oil, palm oil, rapeseed oil, cotton seed oil, maize oil, or their fractions, or a combination thereof. Interesterified fat blends of these fats or optionally with other fats are also encompassed in the invention.

In addition to the primary water-in-oil emulsifier polyglycerol polyricinoleate, the food product according to the invention comprises another emulsifier, the co-emulsifier. This co-emulsifier is preferably also a water-in-oil emulsifier. More preferably this co-emulsifier is selected from the group comprising distilled monoglycerides, citric acid esters of monoglycerides, di-acetyl acetic acid esters of monoglycerides, lactic acid esters of monoglyceride, mono-diglycerides, polyglycerol esters of fatty acids or sorbitan esters of fatty acids.
The most preferred co-emulsifier is a distilled monoglyceride. Even more preferred are combinations of a monoglyceride comprising a saturated fatty acid residue and a monoglyceride comprising an unsaturated fatty acid residue.

The amount of co-emulsifier depends on the type and effectiveness of the emulsifier selected and can be determined by the person skilled in the art. Other factors influencing the amount of emulsifier that is required to obtain storage stable products are the amount of fat and the amount of polyglycerol polyricinoleate.
As a general guidance the amount of emulsifier is preferably from 0.05 to 1.5 wt%, more preferred from 0.1 to 0.7 wt%, most preferred from 0.15 to 0.5 wt%.

In case combinations are used of a monoglyceride comprising a saturated fatty acid residue and a monoglyceride comprising an unsaturated fatty acid residue, their total amount is preferably from 0.3 to 0.4 wt%.

The pH of the aqueous phase can be set to the desired value, among others to influence acidic or basic taste impression and to influence microbial stability. Preferably the pH of the aqueous phase in food products according to the invention is from 4.3 to 5.5.

Optionally some protein is added to the product according to the invention. Protein may be added to beneficially influence the taste, flavour and nutritional value of the food product and also may be added to increase browning of food stuff when the current composition is used as a medium for shallow frying. However care should be taken that the amount of protein is not more than 50%, preferably not more than 30% of the amount of polyglycerol polyricinoleate. Higher amounts of protein were found to lead to destabilising of the water-in-oil emulsion, resulting in phase separation either directly after manufacture, during spreading, or upon storage of the product at elevated temperatures for several weeks.

The food products according to the invention optionally contain other ingredients such as preservatives, vitamins, taste and flavour components, colorants such as beta-carotene, antioxidants, or other non-starch based stabilisers, or thickeners. If the food product is intended for use as a shallow frying agent, preferably an antispattering agent is included in the composition. Antispattering agents serve to reduce spattering of the composition upon heating in a frying pan to about 150 °C. Spattering is believed to be caused by explosive evaporation of water droplets which are present as the dispersed aqueous phase. The method to determine spattering is illustrated in the examples.

Examples of suitable anti-spattering agents include lecithins, citric acid esters, salt and silica particles.

The food product according to the invention can be prepared by any suitable process to prepare such products.

However especially the inclusion of starch which is for at least 50% fully gelatinised, deserves special attention.

According to one embodiment the starch is added in such a form that already at least 50% is fully gelatinised. Such starches can be obtained commercially and are prepared by subjecting a native starch in an aqueous medium to a high temperature treatment, for example at about 60 to 95 °C for more than 10 minutes. The time and temperature of this heat treatment determine the amount of starch that is in fully gelatinised form after the treatment.
The manufacturer's recommendation for starch gelatinisation can in general be followed, but typically a temperature of 90°C for 30 minutes is sufficient to ensure gelatinisation of at least 50% of most commercial starches at a concentration of about 2 to 10 wt% in aqueous medium.

For reasons of process efficiency a process is preferred wherein the starch is gelatinised in situ during preparation of the final food product.

Hence in a preferred embodiment the invention relates to a process for the preparation of the above described food product, wherein an aqueous phase is prepared comprising starch and water, which aqueous phase is heated to a temperature of 60 to 95 °C for at least 15 minutes to gelatinise the starch, and subsequently cooled to a temperature from 50 to 70 °C, and separately a fat phase is prepared comprising fat phase ingredients at a temperature of from 50 to 70 °C and in a further step the aqueous phase and the fat phase are mixed at a temperature of around 60°C.

Fat phase ingredients are ingredients which are soluble or dispersible in the fat phase. Examples of such ingredients include emulsifiers such as monoglycerides and polyglycerol polyricinoleate; antioxidants, colorants.

Regarding the full gelatinisation of starch during processing, adherence to the use of conditions recommended by the supplier of the starch still applies; thus the correct temperature/time heating during spread manufacture needs to be followed.

The aqueous phase is preferably heated to a temperature between 85 to 95 °C for about 15 to 45 minutes. After cooling the aqueous phase to a temperature from 50 to 70 °C, optionally further ingredients may be added to the aqueous phase. Examples of ingredients which can be added at this moment in the process are salts, water soluble or water dispersible antioxidants, flavour components, protein, thickeners, stabilisers, preservatives or acids.

The mixing of the fat phase and the aqueous phase is preferably carried out by using a series of processing equipment, or unit operations, which are common for production of margarine. For example the use of a pin stirrer in combination with a high shear heat exchanger unit, optionally repeating these unit operations several times, is suitable for the preparation of the food products according to the invention.

After mixing of the aqueous phase and the fat phase the resulting product is filled into packaging material. Filling is preferably at a temperature range from 5 to 15 °C.

The invention is now illustrated by the following non-limiting examples.

### Examples

General

### Storage stability test

Food product was stored in a plastic container at 10, 20, 30, 35 and 40°C for up to 26 weeks. After storage the amount of phase separation was determined by visual examination of the product surface. Storage stable products show a phase separation of less than 5 wt% upon storage at 35 °C for at least 10 weeks, preferably at least 26 weeks. Preferably the phase separation is less than 5 wt% upon storage at 40 °C.

### Method to determine D_{3,3}

The water droplet size was measured using a well known low resolution NMR measurement method. Reference is made to Alderliesten, M.; Part.Part. Syst. Charact. 8 (1991), 237-241.

### Method to determine solid fat content

The solid fat content can be measured by a suitable analytical method such as NMR. The method used is low resolution NMR with Bruker Minispec apparatus. Reference is made to the Bruker minispec application notes 4,5 and 6.

The percentage of solid fat determined by the low resolution NMR technique is defined as the ratio of the response obtained from the hydrogen nuclei in the solid phase and the response arising from all the hydrogen nuclei in the sample. The product of this ratio and one hundred is termed the low resolution NMR solids percent. No correction is made for variations in the proton density between solid and liquid phase. The NMR solids percent for a sample measured at t °C was given the symbol Nₜ.

Suitable instruments adapted to determine the solids fat content are the Bruker Minispecs p20i^{tm}, pc20^{tm}, pc120^{tm}, pc120s^{tm}, NMS120^{tm} and MQ20^{tm}.

Stabilization and tempering procedure was as follows:
- melt fat at 80 °C
- 5 minutes at 60 °C
- 60 minutes at 0 °C
- 30-35 minutes at each chosen measuring temperature.

### Spattering value determination

The spattering behaviour of food products according to the invention was evaluated after storage of the products for 1 or 8 days at 5 °C.
Primary spattering (SV1) was assessed under standardised conditions in which an aliquot of a food product was heated in a glass dish and the amount of fat spattered onto a sheet of paper held above the dish was assessed after the water content of the food product had been driven off by heating.

Secondary spattering (SV2) was assessed under standardised conditions in which the amount of fat spattered onto a sheet of paper held above the dish is assessed after injection of a quantity of 10 ml water into the dish.

In assessment of both primary and secondary spattering value about 25 g food product was heated in a glass dish on an electric plate to about 205 °C. The molten fat that spattered out of the pan by force of expanding evaporating water droplets was caught on a sheet of paper situated 25 cm above the pan. The resulting spattering pattern obtained was compared with a set of standard pictures numbered from 0-10 whereby the number of the photo which best resembled the spattering pattern was recorded as the spattering value. A score of 10 indicates no spattering, whilst a zero indicates very bad spattering. The general indication is as follows.

| *Score* | *Comments* |
|---|---|
| 10 | Excellent |
| 8 | Good |
| 6 | Acceptable |
| 4 | Unsatisfactory for SV1, almost acceptable for SV2 |
| 2 | very poor |

Typical results for household margarines (80 wt% fat) are 8 for primary spattering (SV1) and 5 for secondary spattering (SV2) under the conditions of the above mentioned test.

### Example 1-4 and comparative example

Ingredients are listed in table 1

**Table 1; ingredients in wt%**

| ingredient | 1 | 2 | 3 | 4 | Comparative Example 1 |
|---|---|---|---|---|---|
| Fat# | 60 | 60 | 30 | 80 | 60 |
| Hymono 7864 from Quest Int. | 0.3 | 0.2 | 0.3 | 0.2 | 0.3 |
| Admul WOL from Quest Int. | 0.3 | 0.3 | 0.3 | 0.3 | 0.5 |
| Bolec ZT from Unimills | 0.2 | 0.2 | 0.2 | 0.16 | - |
| Remyrice DR (Remy Industries S.A.) | 1.0 | 1.5 | 1.5 | 0.65 | - |
| Salt | 1.5 | 3.0 | 1.5 | 2.7 | 1.5 |
| Antioxidant | | 0.1% TBHQ | | | |
| Colorant | | 0.04% beta-carote ne | | | |
| water | To 100% | To 100% | To 100% | To 100% | To 100% |

| | | | | | |
|---|---|---|---|---|---|
| #:the fat used was: | | | | | |

### example 1-3: a mixture of bean oil fractions and was characterised by a solid fat content of 4% at 35 °C

### example 4: mixture of 65% palm oil and 35% of a dry fractionated palm oil fraction with a solid fat content of 2.5% at 35 °C.

### Processing

In a vessel a mixture was prepared of the fat, monoglyceride, Admul WOL, Antioxidant, and colorant at a temperature of about 60 °C. In another, separate vessel a mixture was made of starch and water which was heated to a temperature of 92 °C for 25 minutes. This mixture was cooled to 60 °C and subsequently mixed with the oil phase in a pre-mix tank at 60 °C, followed by cooling and shearing in a series of A- and C-units^{tm} repeated as necessary to achieve a plastic structure which could be easily packed at around 10 °C in a suitable packaging material.

### Results

| | 1 | 2 | 3 | 4 | Comparative Example 1 |
|---|---|---|---|---|---|
| Spattering value (SV1/SV2) | 8/7.5 | 9/7.5 | Not measured | Not determined | 8/4.5 |
| Storage stability test (26 weeks) | No phase separation at 35°C | No phase separation at 35°C | No phase separation at 35°C | No phase separation at 35°C | No phase separation at 40°C |
| Melting behaviour | Good (1) | Good (1) | Good (1) | Average (2) | Poor (3) |
| D3,3 (µm) | 8 | 8-10 | 8-14 | 2.1 | 3 |

| | | | | | |
|---|---|---|---|---|---|
| Melting behaviour was determined by a test panel of 10 persons on a scale of 1 to 3. 1 indicates fast melting with good release of flavours and taste components 2 indicates average melting behaviour 3 indicates slow melting, leaving a sticky, thick, fatty impression upon consumption. | | | | | |

Comparative example 1 (not according to the invention) shows that even though ambient temperature stability can be achieved, the gelatinised starch is still necessary to deliver good organoleptic properties.

### Example 5

The products of example 1 were prepared with a fat blend which was an interesterified mixture of 10% fully hardened palm oil with a slip melting point of 58 °C and 20% fully hardened palm kernel oil with a slip melting point of 39 °C, which was mixed with 70% bean oil.

The resulting products showed good stability i.e. no phase separation at 35°C and had a good melting behaviour on consumption.

### Example 6

The products of example 1 were prepared with a fat blend which was a mixture of 65% palm oil and 35% of a dry fractionated palm oil fraction with a solid fat content of 2.5% at 35 °C.

The resulting products showed good stability i.e. no phase separation at 35°C and had a good melting behaviour on consumption.

### Example 7

The products of example 1 were prepared with the modification that the amount of fat was 50 wt% and the fat was a mixture of 58% bean oil and 42% partially hardened bean oil with a slip melting point of 43 °C.

The resulting products showed good stability i.e. no phase separation at 35°C and had a good melting behaviour on consumption.

## Claims

1. Fat continuous spreadable food product comprising a dispersed aqueous phase, a primary water-in-oil emulsifier polyglycerol polyricinoleate, and one or more co-emulsifiers, wherein the amount of fat is from 25 to 85 wt%, the amount of polyglycerol polyricinoleate is from 0.05 to 5 wt%, the amount of co-emulsifier is up to 0.5 wt% and **characterised in that** the dispersed aqueous phase comprises a starch of which at least 50 wt% is fully gelatinised, and **in that** the solid fat content of the fat is below 6 % at 35°C.

2. Food product according to any of the previous claims, wherein all starch is fully gelatinised.

3. Food product according to any of the previous claims, wherein the dispersed aqueous phase comprises a fully gelatinised starch selected from any of the main starch groups comprising rice, waxy rice, maize, waxy maize, potato, or tapioca.

4. Food product according to any of the previous claims wherein the amount of starch is from 0.2 to 5 wt%, more preferred from 0.7 to 3 wt%, most preferred from 1 to 2 wt%.

5. Food product according to any of the previous claims wherein the droplet size distribution D3,3 of the dispersed aqueous phase is less than 20 µm, preferably from 4 to 10 µm.

6. Food product according to any of the previous claims wherein the amount of fat is from 30 to 75 wt%, preferably from 35 to 70 wt%, more preferred from 45 to 65 wt%.

7. Food product according to any of the previous claims wherein the solid fat content of the fat is below 6% at a temperature at or above 20 °C.

8. Food product according to any of the previous claims wherein the amount of polyglycerol polyricinoleate is from 0.2 to 0.4 wt%.

9. Food product according to any of the previous claims wherein the co-emulsifier is selected from the group comprising distilled monoglycerides, citric acid esters of monoglycerides, di-acetyl acetic acid esters of monoglycerides, lactic acid esters of monoglyceride, mono-diglycerides, polyglycerol esters of fatty acids or sorbitan esters of fatty acids.

10. Food product according to any of the previous claims which comprises protein in amount of not more than 50%, preferably not more than 30% of the amount of polyglycerol polyricinoleate.

11. Process for the preparation of a food product according to any of the previous claims wherein an aqueous phase is prepared comprising starch and water, which aqueous phase is heated to a temperature from 60 to 95 °C for at least 15 minutes to gelatinise the starch such that at least 50% is gelatinised, and subsequently cooled to a temperature of from 50 to 70 °C, and separately a fat phase is prepared comprising fat phase ingredients at a temperature of around 60°C and in a further step the aqueous phase and the fat phase are mixed at a temperature around 60°C.

## Patentansprüche

1. Streichfähiges Nahrungsmittelprodukt mit kontinuierlicher Fettphase, umfassend eine dispergierte wässrige Phase, einen primären Wasser-in-Öl-Emulgator Polyglyzerinpolyricinoleat und einen Co-Emulgator oder mehrere Co-Emulgatoren, wobei die Fettmenge 25 bis 85 Gew.-% ist, die Menge an Polyglyzerinpolyricinoleat 0,05 bis 5 Gew.-% ist, die Menge an Co-Emulgator bis zu 0,5 Gew.-% ist,
**dadurch gekennzeichnet, dass** die dispergierte wässrige Phase eine Stärke umfasst, von der wenigstens 50 Gew.-% vollständig gelatiniert sind, und dass der Gehalt des Fetts an festem Fett bei 35 °C unter 6 % liegt.

2. Nahrungsmittelprodukt nach einem der vorangehenden Ansprüche, wobei die gesamte Stärke gelatiniert ist.

3. Nahrungsmittelprodukt nach einem der vorangehenden Ansprüche, wobei die dispergierte wässrige Phase eine vollständig gelatinierte Stärke umfasst, die aus einer der Hauptstärkegruppen, umfassend Reis, Wachsreis, Mais, Wachsmais, Kartoffeln oder Tapioka, ausgewählt ist.

4. Nahrungsmittelprodukt nach einem der vorangehenden Ansprüche, wobei die Menge an Stärke 0,2 bis 5 Gew.-%, bevorzugter 0,7 bis 3 Gew.-%, am bevorzugtesten 1 bis 2 Gew.-%, ist.

5. Nahrungsmittelprodukt nach einem der vorangehenden Ansprüche, wobei die Tröpfchengrößenverteilung D3,3 der dispergierten wässrigen Phase kleiner als 20 µm, vorzugsweise 4 bis 10 µm, ist.

6. Nahrungsmittelprodukt nach einem der vorangehenden Ansprüche, wobei die Menge an Fett 30 bis 75 Gew.-%, vorzugsweise 35 bis 70 Gew.-%, bevorzugter 45 bis 65 Gew.-%, ist.

7. Nahrungsmittelprodukt nach einem der vorangehenden Ansprüche, wobei der Gehalt des Fetts an festem Fett bei einer Temperatur von 20 °C oder darüber unter 6 % liegt.

8. Nahrungsmittelprodukt nach einem der vorangehenden Ansprüche, wobei die Menge an Polyglyzerinpolyricinoleat 0,2 bis 0,4 Gew.-% ist.

9. Nahrungsmittelprodukt nach einem der vorangehenden Ansprüche, wobei der Co-Emulgator aus der Gruppe ausgewählt ist, die destillierten Monoglyceride, Zitronensäureester von Monoglyceriden, Diacetylessigsäureester von Monoglyceriden, Milchsäureester von Monoglycerid, Monodiglyceride, Polyglyzerinester von Fettsäuren oder Sorbitanester von Fettsäuren umfasst.

10. Nahrungsmittelprodukt nach einem der vorangehenden Ansprüche, das Protein in einer Menge von nicht mehr als 50 %, vorzugsweise nicht mehr als 30 %, der Menge an Polyglyzerinpolyricinoleat umfasst.

11. Verfahren zur Herstellung eines Nahrungsmittelprodukts nach einem der vorangehenden Ansprüche, wobei eine wässrige Phase, die Stärke und Wasser umfasst, hergestellt wird, die wässrige Phase auf eine Temperatur von 60 bis 95 °C für wenigstens 15 Minuten erwärmt wird, um die Stärke zu gelatinieren, so dass wenigstens 50 % gelatiniert werden, und anschließend auf eine Temperatur von 50 bis 70 °C abgekühlt wird, und getrennt eine Fettphase, die Fettphasen-Ingredienzien umfasst, bei einer Temperatur von 60 °C hergestellt wird, und in einem weiteren Schritt die wässrige Phase und die Fettphase bei einer Temperatur von etwa 60 °C vermischt werden.

## Revendications

1. Produit alimentaire tartinable à phase grasse continue comprenant une phase aqueuse dispersée, un émulsifiant eau dans l'huile principal de polyricinoléate de polyglycérol, et un ou plusieurs co-émulsifiants, dans lequel la quantité de graisse est de 25 à 85 % en poids, la quantité de polyricinoléate de polyglycérol est de 0,05 à 5 % en poids, la quantité de co-émulsifiant va jusqu'à 0,5 % en poids, et **caractérisé en ce que** la phase aqueuse dispersée comprend un amidon dont au moins 50 % en poids sont entièrement gélatinisés, et **en ce que** la teneur en graisse solide de la graisse est inférieure à 6 % à 35°C.

2. Produit alimentaire selon l'une quelconque des revendications précédentes, dans lequel tout l'amidon est entièrement gélatinisé.

3. Produit alimentaire selon l'une quelconque des revendications précédentes, dans lequel la phase aqueuse dispersée comprend un amidon entièrement gélatinisé choisi dans n'importe lequel des principaux groupes d'amidon comprenant le riz, le riz cireux, le maïs, le maïs cireux, la pomme de terre ou le tapioca.

4. Produit alimentaire selon l'une quelconque des revendications précédentes, dans lequel la quantité d'amidon est de 0,2 à 5 % en poids, mieux de 0,7 à 3 % en poids, mieux encore de 1 à 2 % en poids.

5. Produit alimentaire selon l'une quelconque des revendications précédentes, dans lequel la distribution des tailles des gouttelettes D_{3,3} de la phase aqueuse dispersée est inférieure à 20 µm, mieux elle est de 4 à 10 µm.

6. Produit alimentaire selon l'une quelconque des revendications précédentes, dans lequel la quantité de graisse est de 30 à 75 % en poids, mieux de 35 à 70 % en poids, mieux encore de 45 à 65 % en poids.

7. Produit alimentaire selon l'une quelconque des revendications précédentes, dans lequel la teneur en graisse solide de la graisse est inférieure à 5 % à une température supérieure ou égale à 20°C.

8. Produit alimentaire selon l'une quelconque des revendications précédentes, dans lequel la quantité de polyricinoléate de polyglycérol est de 0,2 à 0,4 % en poids.

9. Produit alimentaire selon l'une quelconque des revendications précédentes, dans lequel le co-émulsifiant est choisi dans le groupe comprenant les monoglycérides distillés, l'acide citrique, les esters de monoglycérides, les esters d'acide citrique de monoglycérides, les esters d'acide di-acétyl tartrique de monoglycérides, les esters d'acide lactique de monoglycéride, les mono-diglycérides, les esters de polyglycérol d'acides gras ou les esters de sorbitane d'acide gras.

10. Produit alimentaire selon l'une quelconque des revendications précédentes, comprenant une protéine dans une quantité qui n'est pas supérieure à 50 %, mieux qui n'est pas supérieure à 30 % de la quantité de polyricinoléate de polyglycérol.

11. Procédé de préparation d'un produit alimentaire selon l'une quelconque des revendications précédentes, dans lequel on prépare une phase aqueuse comprenant de l'amidon et de l'eau, ladite phase aqueuse étant chauffée à une température de 60 à 95°C pendant au moins 15 minutes pour gélatiniser l'amidon de telle sorte qu'il soit gélatinisé à au moins 50 %, et étant ensuite refroidie à une température de 50 à 70°C, et dans lequel on prépare séparément une phase grasse comprenant les ingrédients de la phase grasse à une température aux alentours de 60°C et dans lequel, dans le cadre d'une autre étape, la phase aqueuse et la phase grasse sont mélangées à une température aux alentours de 6°C.
